# EUROPEAN PATENT APPLICATION

(11) **EP 1 422 012 A1**
(43) Date of publication of application: **26.05.2004**
(21) Application number: 03404004.8
(22) Date of filing: 25.07.2003
(51) Int. Cl.: B23K 11/31, F15B 11/036, F15B 11/12

(54) **Multi-positional tandem cylinder for welding pliers**

(30) Priority: 15.08.2002 TR 200202011
(71) Applicant: Festo San Ve Tic A.S, 81474 Tuzla-Istanbul (TR)
(72) Inventor: Haller, Rolf, 73765 Neuhausen (DE); Haslinger, Maximilian, 70597 Stuttgart (DE); Caracic, Nicola, 75061 Ebersbach (DE); Bauer, W. Otto, c/o Festo San ve Tic A.S, 81474 Tuzla (TR); Dayioglu, Emrah, Coskunöz M. F. M. End ve Tic A.S, Bursa (TR)
(74) Representative: Gögüs, Münevver Lale

(57) **Abstract**

Welding pliers cylinder is a non-ferrite, multi-positional, small-volume tandem cylinder realizing jaw movement of welding pliers. In applications where piston rod should be secure against rotation, one or both of the piston rods numbered (5) and (4) are selected to ensure safety against rotation. In cases where security against rotation is unnecessary, piston rods numbered (5) and (4) may be circular cross-sectioned. With tandem feature, the effect power of piston rod to the most forward and reverse positions is increased. Such feature is used to produce high power in small volume in welding pliers. As linked to the application, welding power is sometimes used in the reverse movement of the cylinder and sometimes in the forward movement of the same.

## Description

The cylinder for welding pliers realizes the jaw movement used in various sectors (automobile, white goods, etc.).

Since there is no standardization in welding pliers yet, no systematic explanation is possible. In accordance with the welding and application, we can observe varying designs and operating principles. Welding pliers cylinders are mostly designed and produced by welding pliers manufacturers. Disadvantages and weak spots currently encountered in the existing cylinders can be expressed as follows:
- O-ring type non-leakage elements used for the purpose of non-leakage on cylinder piston and piston rod remain weak as to functional reliability. Such non-leakage elements, particularly in places where dynamic non-leakage is in question, remain poor with respect to quality, life and ensuring non-leakage.
- In some designs, a secondary sledge unit preventing rotation aside with the piston rod and supporting linear movement for the purpose of prevention of rotary movement of the piston rod. Such designs cause formation of additional friction and loss of power.
- In some designs, the complex operating order formed by placing the cylinders one within another, makes it difficult to disassemble-assemble and repair-maintain.

This invention being a new one, it has features, which makes it different from other welding cylinders. We can list these as follows:
- Reliability is ensured as a result of use of design methods and non-leakage elements of high-quality (For example, using of non-leakage elements to the purpose at places of relative movements and corresponding adaptation of the design). As linked to that, in the movement of the cylinder mile from the medium position to forward position, or from the medium position to reverse position, due to its high power resulting from its tandem feature, welding process, depending on the used welding pliers, can be realized both in forward movement and reverse movement.
- In applications where piston rod should be secured against rotation, one or both of the piston rods numbered either (5) or (4) being selected with square cross-section, their security against rotation is ensured, and in other existing designs, additional equipment suggested for the same being eliminated, the system is simplified. Besides, in cases where security against rotation is unnecessary, piston rod with circular cross-section is used.
- Construction of a smaller-sized cylinder with a compact design ensured as a consequence its filling less space and being lighter.

Explanations regarding the drawings helping understanding of the invention :
Drawing 1: Right side view of the invention,
Drawing 2: Longitudinal view of the invention,
Drawing 3: Left side view of the invention,
Drawing 4: Upper side view of the invention.

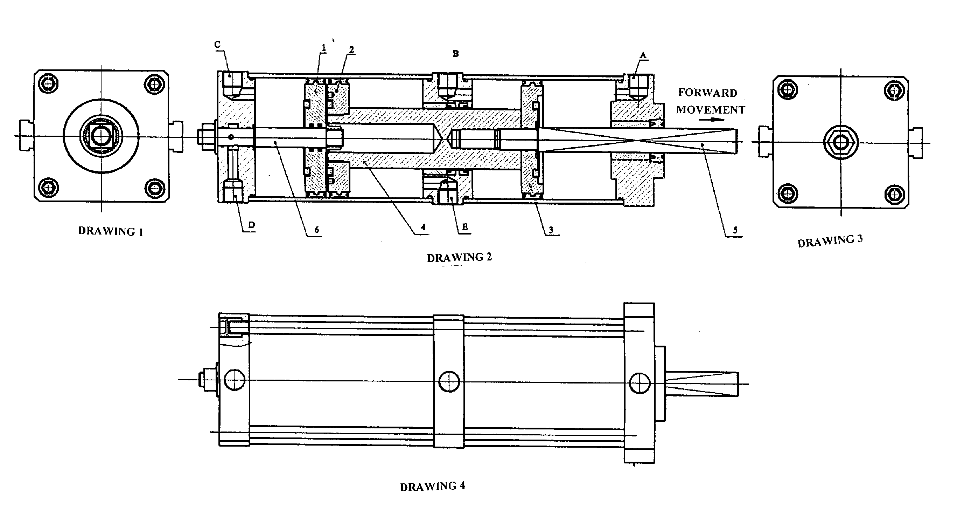

While the cylinder rod moves from the medium position to reverse position, for welding, first compressed air is provided to the subject cylinder of the invention from (E) and (C) air connection points, and pistons numbered (1) and (2) are moved. With the air from connection point (C), piston numbered (1) moves forward on the stationary piston rod numbered (6) and is stopped with the limitation nut mounted to the end of the piston rod numbered (6). Air from (E) connection point moves piston numbered (2) and piston rods numbered (4) and (5) connected to that piston toward piston numbered (1). Thus, piston numbered (2) moves as far as piston numbered (1), and its movement is stopped by piston numbered (1). Since the effective surface of piston numbered (1) is bigger than that of piston numbered (2), thrust of piston numbered (1) is bigger than that of piston numbered (2), and therefore, piston numbered (1), stops the movement of piston numbered (2). Thus, the medium position of the piston rod with square cross-section numbered (5) is formed. Opening the connection points (E) and (A) to the atmosphere, and ensuring release of the air in there, and applying pressurized air from (D) connection point, it is ensured that the piston rod with square cross-section numbered (5) moves to the most forward position. Thus, the most forward position of piston rod with square cross-section numbered (5) is established. The air applied from (D) connection point for realization of this movement passes through the channel within the stationary piston rod numbered (6), and is moved into the space to the rear part of the medium piston rod numbered (4), and from there in between pistons numbered (1) and (2), and moves piston numbered (2) forward. Simultaneously, air entering into the space to the left side of the piston numbered (3) from (B) connection point prevents formation of a vacuum.

Opening the connection points (C) and (D) to the atmosphere, and applying pressurized air from (A) and (E) connection points, the most reverse position of the piston rod with square cross-section numbered (5) is formed. In such case, due to the pressurized air affecting the right sides of pistons numbered (2) and (3), total power affects piston rods numbered (4) and (5) with form connection to each other on tandem order. Thus, power necessary for welding is ensured.

During welding process, piston rod with square cross-section numbered (5) moves between the medium and most reverse positions. When the piston rod with square cross-section numbered (5) reaches to the most reverse position, welding process is realized. For full opening of the welding pliers, piston rod with square cross-section numbered (5) goes to the most forward position

While the cylinder goes from the medium position to the forward position, for welding, pressurized air is applied from (E) and (C) air connection points to the subject cylinder of the invention, pistons numbered (1) and (2) are moved. With the air from © connection point, piston numbered (1) is moved forward on the stationary piston rod numbered (6), and is stopped by the limitation nut mounted onto the end of piston rod numbered (6) ahead. Air applied from (E) connection point moves piston numbered (2) and piston rods numbered (4) and (5) connected to this piston toward piston numbered (1). Thus, piston numbered (1). Since the effective surface of piston numbered (1) is bigger than that of piston numbered (2), thrust of piston numbered (1) stops the movement of piston numbered (2). Thus, the medium position of the medium position of the piston rod with square cross-section numbered (5) is formed. Opening the connection points (C) and (E) to the atmosphere, and ensuring release of the air in there, and applying pressurized air from (A) connection point, it is ensured that the piston rod with square cross-section numbered (5) moves to the most reverse position. Thus, the most reverse position of piston rod with square cross-section numbered (5) is established. Simultaneously, the air inside is released from (B) connection point to the left side of piston numbered (3).

Opening the connection points (A) and (E) to the atmosphere, and applying pressurized air from (B) and (D) connection points, it is ensured that the piston rod with square cross-section numbered (5) moves to the most forward position. Thus, due to the pressurized air affecting the left sides of pistons numbered (2) and (3), total power affects the piston rods numbered (4) and (5) with form connection to each other in tandem order. Thus, the power required for welding is ensured.

During welding process, piston rod with square cross-section numbered (5) moves between medium and most forward positions. Each time piston rod with square cross-section numbered (5) moves to the forward position, welding process takes place.
For full opening of welding pliers, piston rod with square cross-section numbered (5) goes to the most reverse position.

Along with the aforementioned invention;
- Pressurized air is forced to pass through the stationary rod numbered (6) on which piston numbered (1) of the free pistons numbered (2) and (1) moves, and forward movement of piston numbered (2) is ensured.
- In pistons numbered (2) and (1), effect planes of different size were formed as in the design, and movement of piston rod numbered (5) to the start position with a simpler and more reliable design was realized.
- When piston rod (5) or (4) are selected with square cross-section, safety against rotary of piston rod is provided.
- It is ensured that the cylinder is not ferrite that has the features of being multi-positional and tandem.

Welding pliers are used in varying sectors (for example: automobile, white goods etc.) in semiautomatic or full automatic welding machines or robots. Welding pliers are used in handling of the welding process. The jaw movement of such pliers is realized by a "welding pliers cylinder". The movement of these cylinders and control of such movement is important in terms of welding technique. Therefore, "welding pliers cylinder" ensures quality, speed and efficiency of welding in design of the welding pliers, and thus the welding robot, and increases the reliability of welding.

## Claims

1. The non-ferrite, multi-positional small volume tandem cylinder realizing jaw movement in welding pliers with features that the piston numbered (1) of the free pistons numbered (2) and (1) moves on the stationary rod numbered (6) and as a result of the movement of piston numbered (2) with piston rod numbered (4) affecting different-sized planes of the pressurized air passing through the stationary rod numbered (6), it ensures that different-sized thrusts are formed and when pressurized air is applied to the left side of piston numbered (1) from (C ) connection point, that the piston rod numbered (5) moves between the forward position and medium position.

2. The non-ferrite, multi-positional tandem cylinder mentioned in request 1, with features of ensuring welding with the power obtained with the effect of tandem in both forward and reverse movement from the medium position of the piston rod. (5).

3. Non-ferrite, multi-positional, small volume tandem cylinder mentioned in request 1 and 2 with features that piston rods numbered (5) and (4) are square cross-sectioned or circular.

4. Non-ferrite, multi-positional, small-volume tandem cylinder mentioned in requests 1 and 2 with features that security against rotation is ensured by way of using the piston rod numbered (5) and (4) with square cross-section.

5. Non-ferrite, multi-positional and small-volume tandem cylinder mentioned in 1,2,3 and 4 with features of non-leakage, and usage of non-leakage elements in both sides.
